# EUROPÄISCHE PATENTSCHRIFT

(11) **EP 2 855 185 B1**
(45) Veröffentlichungstag und Bekanntmachung des Hinweises auf die Patenterteilung: **19.06.2019**
(21) Anmeldenummer: 13719124.3
(22) Anmeldetag: 30.04.2013
(51) Int. Cl.: B60K 11/08

(54) **VORRICHTUNG ZUM REGULIEREN EINER LUFTSTRÖMUNG ZU EINER KÜHLERVORRICHTUNG EINES FAHRZEUGES SOWIE FRONTENDELEMENT EINES FAHRZEUGES**
DEVICE FOR REGULATING AN AIR FLOW TOWARDS A RADIATOR ASSEMBLY OF A VEHICLE AND FRONT END ELEMENT OF A VEHICLE
DISPOSITIF POUR RÉGULER UN FLUX D'AIR VERS UN ENSEMBLE DE RADIATEUR D'UN VÉHICULE ET FAÇADE AVANT D'UN VÉHICULE

(30) Priorität: 31.05.2012 DE 102012104723
(43) Veröffentlichungstag der Anmeldung: 08.04.2015
(73) Patentinhaber: HBPO GmbH, 59552 Lippstadt (DE)
(72) Erfinder: BRÜCKNER, Reinhold, 33442 Herzebrock-Clarholz (DE)
(74) Vertreter: Vogel, Andreas
(86) Internationale Anmeldenummer: PCT/EP2013/059007
(87) Internationale Veröffentlichungsnummer: WO 2013/178419

(56) Entgegenhaltungen:
- DE-A1-102008 006 020
- DE-A1-102010 012 485
- DE-A1-102011 011 035
- FR-A1- 2 738 779

## Beschreibung

Die Erfindung betrifft eine Vorrichtung zum Regulieren einer Luftströmung zu einer Kühlervorrichtung eines Fahrzeuges, wobei die Luftströmung durch zumindest eine Öffnung eines Stossfängerüberzuges auf die Kühlervorrichtung geleitet ist und ein Rolloelement vorgesehen ist, das zwischen einer ersten und zumindest einer zweiten Stellung verstellbar ist, wobei das Rolloelement die Öffnung in der ersten Stellung freigibt und in der zumindest einen zweiten Stellung zumindest teilweise verschließt. Ferner betrifft die Erfindung ein Frontendelement eines Fahrzeuges, zumindest aufweisend einen Montageträger, eine Kühlervorrichtung, einen Stossfängerüberzug, wobei die Kühlervorrichtung und der Stossfängerüberzug am Montageträger befestigt sind, ein am Stossfängerüberzug angeordnetes Kühlerschutzgitter, wobei im Stossfängerüberzug zumindest eine Öffnung zum Leiten einer Luftströmung auf die Kühlervorrichtung vorgesehen ist, und eine Vorrichtung zum Regulieren der Luftströmung mit einem Rolloelement, wobei das Rolloelement zwischen einer ersten und zumindest einer zweiten Stellung verstellbar ist und wobei das Rolloelement die zumindest eine Öffnung in der ersten Stellung freigibt und in der zumindest einen zweiten Stellung zumindest teilweise verschließt.

In modernen Fahrzeugen, insbesondere in Kraftfahrzeugen, wird durch einen Kühlergrill des Fahrzeuges beziehungsweise durch die Öffnungen des Kühlergrills einströmende Frischluft kanalisiert und auf eine Kühlervorrichtung des Fahrzeuges geleitet. Durch dieses gezielte kanalisierte Leiten des Luftstroms auf die Kühlervorrichtung kann sichergestellt werden, dass beispielsweise ein Motor des Fahrzeuges effizient gekühlt und/oder der Fahrzeuginnenraum effizient klimatisiert werden kann.

Unter anderem aus Gründen der Reduzierung des CO2-Ausstoßes kommen dabei insbesondere bei Kraftfahrzeugen Systeme mit einem steuerbaren Kühllufteintritt zum Einsatz. Diese Systeme können dabei vorrangig die Kaltlaufphase verkürzen und eine schnellere Erreichung der Betriebstemperatur des Motors des Kraftfahrzeuges sicherstellen. Um zusätzlich den Luftwiderstand des Fahrzeuges möglichst gering auszugestalten besteht das Bemühen, dieses System möglichst weit vorne im Bereich des Kühllufteintritts zu platzieren. Insbesondere kann dadurch erreicht werden, dass ein Luftpolster, das sich zwischen dem Kühllufteintritt und dem System zum Steuern des Kühllufteintritts bildet und das sich negativ auf den Luftwiderstand des Fahrzeuges auswirkt, möglichst klein dimensioniert gestaltet werden kann.

Es ist bekannt, in derartigen Vorrichtungen zum Regulieren einer Luftströmung Klappensysteme einzusetzen. Diese Klappensysteme weisen jedoch, je nach Klappenhöhe, im geöffneten Zustand einen erheblichen Platzbedarf in Fahrzeuglängsrichtung auf. Des Weiteren werden die Luftströme durch die Klappen entsprechend der unterschiedlichen Öffnungswinkel der Klappen abgeleitet und können so nicht zu jeder Zeit optimal genutzt werden.

Um diese nachteiligen Eigenschaften von Klappensystemen in Vorrichtungen zum Regulieren einer Luftströmung zu umgehen, kann es von Vorteil sein, die Klappensysteme durch ein Rolloelement zu ersetzen. So ist beispielsweise aus der DE 10 2009 043 028 A1 ein Rolloelement zum Verschluss eines Kühllufteintritts für ein Kraftfahrzeug bekannt. Das Rolloelement wird über einen Seilzug angetrieben und kann an seinen seitlichen Enden in einem Schlitz geführt sein. Insbesondere bei hohen Geschwindigkeiten, bei denen ein Schließen des Kühllufteintritts zum Erreichen eines besonders günstigen Luftwiderstandes des Kraftfahrzeuges nötig sein kann, kann es jedoch vorkommen, dass der Luftanpressdruck auf das Rolloelement dieses aus der Führung herausdrückt und somit zum Einen der Kühllufteintritt nicht mehr vollständig geschlossen ist und zum Anderen ein günstiger, geringerer Luftwiderstand des Fahrzeuges nicht mehr erreichbar ist.

Eine Vorrichtung mit den Merkmalen des Oberbegriffs des Anspruchs 1 und ein Frontendelement mit den Merkmalen des Oberbegriffs des Anspruchs 11 ist aus der FR 2 738 779 A1 bekannt.

Es ist Aufgabe der vorliegenden Erfindung, die voranstehend genannten Nachteile bekannter Luftführungssysteme zu beheben. Insbesondere ist es Aufgabe der Erfindung, eine Vorrichtung zum Regulieren einer Luftströmung zu einer Kühlervorrichtung eines Fahrzeuges sowie ein Frontendmodul eines Fahrzeuges zu schaffen, die in einfacher und kostengünstiger Weise ein besonders stabiles und widerstandsfähiges gesteuertes zumindest teilweises Verschließen eines Kühllufteintritts erlauben, wobei zugleich eine möglichst geringe Bauraumbeanspruchung erreicht werden kann.

Die voranstehende Aufgabe wird gelöst durch eine Vorrichtung zum Regulieren einer Luftströmung mit den Merkmalen des unabhängigen Anspruchs 1 sowie durch ein Frontendelement für ein Fahrzeug mit den Merkmalen des unabhängigen Anspruchs 11. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Vorrichtung beschrieben sind, selbstverständlich auch in Zusammenhang mit dem erfindungsgemäßen Frontendelement und jeweils umgekehrt, so dass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe gelöst durch eine Vorrichtung zum Regulieren einer Luftströmung mit den Merkmalen des Anspruchs 1.

Durch die erfindungsgemäße Vorrichtung zum Regulieren einer Luftströmung kann die Luftzuführung zur Kühlervorrichtung des Fahrzeuges variabel gestaltet werden. So ist insbesondere zu Beginn des Betriebs des Fahrzeuges für eine Warmlaufphase ein vollständiges Verschließen der Öffnung durch das Rolloelement in seiner zweiten Stellung möglich. Dadurch wird die Kühlervorrichtung des Fahrzeuges nicht durch die Luftströmung gekühlt und der Motor des Fahrzeuges kann sich schneller erwärmen. Die Wärmlaufphase des Fahrzeuges kann dadurch verkürzt werden. Nach einer derartigen Warmlaufphase kann es günstig sein, die Öffnung wieder freizugeben, das Rolloelement wird daraufhin wieder in seine erste Stellung verbracht, in der es die Öffnung freigibt. Eine Kühlung der Kühlervorrichtung durch die Luftströmung wird in diesem Fall nicht mehr behindert, der Motor des Fahrzeuges kann durch die Kühlervorrichtung effizient gekühlt werden. Insbesondere bei besonders hohen Geschwindigkeiten, für deren Erreichen ein besonders geringer Luftwiderstand des Fahrzeuges günstig ist, kann das Rolloelement wieder in seine zumindest eine zweite Stellung verbracht werden, so dass keine Luft mehr durch die zumindest eine Öffnung des Stossfängerüberzuges eintritt und somit der Luftwiderstand des Fahrzeuges vermindert werden kann. Besonders aber nicht ausschließlich in letzterem Beispiel verleiht das Unterstützungselement dem Rolloelement Stabilität. Auch kann, insbesondere bei hohen Geschwindigkeiten, vor allem wenn das Rolloelement in seiner zumindest einen zweiten Stellung die Öffnung nicht vollständig verschließt, ein Flattern des Rolloelementes verhindert werden. Dies vermindert darüber hinaus die Gefahr von einer Zerstörung des Rolloelementes durch das Auftreten von Rissen im Rolloelement. Ferner kann durch das Unterstützungselement das Rolloelement dahingehend unterstützt werden, dass eine möglichst gleichmäßige, glatte Fläche für die anströmende Luft ausgebildet ist. Auch dieses Merkmal kann sich positiv auf den Luftwiderstand des Fahrzeuges auswirken. Insbesondere, wenn das Rolloelement in seiner zumindest einen zweiten Stellung die Öffnung vollständig verschließt, ergibt sich ferner eine besonders gute Abgrenzung des Motorraums des Fahrzeuges gegenüber der Außenwelt. Insgesamt kann durch die Unterstützung des Rolloelementes durch das Unterstützungselement ferner das Rolloelement selbst aus einem entsprechend weniger stabilen Material ausgebildet sein. Dadurch kann sich eine Gewichtsersparnis ergeben.

Ferner ist bei einer erfindungsgemäßen Vorrichtung zum Regulieren einer Luftströmung vorgesehen, dass das Unterstützungselement gitterartig ausgestaltet ist. Ein gitterartiges Unterstützungselement weist dabei eine besonders hohe Stabilität bei einer gleichzeitig hohen Luftdurchlässigkeit, insbesondere bei einem Rolloelement in seiner ersten Position, auf. Durch eine Ausgestaltung des Unterstützungselementes als Gitter können somit beide Vorteile, eine gute Unterstützung des Rolloelements bei gleichzeitig möglichst geringer Behinderung der Luftströmung realisiert werden. Auch stellt ein gitterartiges Unterstützungselement eine Ausgestaltung eines Unterstützungselementes dar, durch die eine möglichst hohe Stabilität bei möglichst geringem Materialaufwand erreicht werden kann. Die Vorrichtung zum Regulieren einer Luftströmung ist hinter einem Kühlerschutzgitter angeordnet, wobei die gitterartige Form des Unterstützungselementes an die Form des Kühlerschutzgitters angepasst ist. Eine besonders gute und störungsarme Luftströmung kann so erreicht werden.

Darüber hinaus kann bei einer erfindungsgemäßen Vorrichtung zum Regulieren einer Luftströmung vorgesehen sein, dass die zur Unterstützung des Rolloelementes verwendeten Abschnitte des Unterstützungselementes glatt, insbesondere abgerundet ausgestaltet sind. Im Betrieb kann das Rolloelement, insbesondere in seiner zumindest einen zweiten Position, auf dem Unterstützungselement aufliegen. Durch die Ausgestaltung der zur Unterstützung des Rolloelementes verwendeten Abschnitte des Unterstützungselementes, und somit die Abschnitte des Unterstützungselementes, auf denen das Rolloelement aufliegt, in einer glatten, insbesondere abgerundeten, Weise kann das Rolloelement geschützt werden. Insbesondere weist das Unterstützungselement in diesen Abschnitten vorteilhafterweise keine scharfen Kanten auf. Eine Zerstörung des Rolloelementes durch das Unterstützungselement, insbesondere auch bei hohen Anpressdrücken des Rolloelementes auf das Unterstützungselement, kann somit sicher vermieden werden.

Ferner kann eine erfindungsgemäße Vorrichtung zum Regulieren einer Luftströmung dahingehend ausgestaltet sein, dass das Unterstützungselement als ein, insbesondere tragendes, Teil des Stossfängerüberzuges ausgebildet ist. Insbesondere kann dabei das Unterstützungselement aus einem, insbesondere steiferem, Kunststoff gefertigt sein als zumindest Teile des restlichen Stossfängerüberzuges. Der Stossfängerüberzug eines Fahrzeuges ist dahingehend vorgesehen, bei einer Kollision des Fahrzeuges zumindest einen Teil der Kollisionsenergie durch Verformung aufzunehmen. Der Stossfängerüberzug ist somit üblicherweise aus einem formstabilen aber flexiblen Kunststoff ausgefertigt, der üblicherweise durch zusätzliche, stabilere Bauteile unterstützt wird. Dadurch, dass das Unterstützungselement als ein tragendes Teil des Stossfängerüberzuges ausgebildet ist, verleiht das Unterstützungselement dem Stossfängerüberzug Stabilität. Zusätzliche Bauteile zur Unterstützung der Stabilität des Stossfängerüberzuges können somit eingespart oder zumindest der Bedarf für solche zusätzliche Bauteile verringert werden.

Vorteilhafterweise kann bei einer erfindungsgemäßen Vorrichtung zum Regulieren einer Luftströmung vorgesehen sein, dass die Vorrichtung ein Antriebselement, insbesondere ein Wickelelement, zum Verstellen des Rolloelementes aufweist. Als Wickelelement wird dabei insbesondere jede Vorrichtung zum Aufwickeln des Rollos verstanden. Als Antriebselement sind für das Rolloelement dabei insbesondere beispielsweise Seilzüge, Spiralen oder sonstige Elektroantriebe denkbar. Das Verstellen des Rolloelementes erfolgt dabei angetrieben durch das Antriebselement. Ein Wickelelement, beispielsweise ein angetriebenes zylinderförmiges Bauteil, auf das das Rolloelement aufgewickelt wird, ist dabei ein besonders einfaches Antriebselement, das zudem besonders platzsparend ist.

Darüber hinaus kann bei einer erfindungsgemäßen Vorrichtung zum Regulieren einer Luftströmung vorgesehen sein, dass das Unterstützungselement zumindest eine Aufnahme zum Aufnehmen einer Randung des Rolloelementes aufweist. Die Aufnahme des Unterstützungselementes kann dabei insbesondere eine Führung für die Randung des Rolloelementes darstellen. Dadurch ergeben sich im Bereich der Aufnahme und der Randung des Rolloelementes ein besonders guter und definierter Halt des Rolloelementes und eine besonders gute Abdichtung der Öffnung. Ferner greifen an der Randung des Rolloelementes, insbesondere wenn sich das Rolloelement in seiner zumindest einen zweiten Stellung befindet, große Kräfte an, die die Randung zum Flattern bringen können. Durch die Aufnahme des Unterstützungselementes, die zum Aufnehmen der Randung des Rolloelementes ausgestaltet ist, kann dieses Flattern verhindert werden. Dadurch kann ein Schutz vor einem Einreißen der Randung und damit vor einer Zerstörung des Rolloelementes erreicht werden.

Weiterhin ist eine erfindungsgemäße Vorrichtung zum Regulieren einer Luftströmung dahingehend ausgestaltet, dass das Unterstützungselement zumindest ein Führungselement zum Führen des Rolloelementes beim Verstellen des Rolloelementes aufweist. Durch das Führungselement sind zusätzlich zum restlichen Unterstützungselement eine Definition des Verlaufs des Rolloelementes und damit ein definierteres örtliches Verstellen möglich. Das Führungselement kann dabei auch beispielsweise einen gebogenen Verlauf aufweisen, dem das Rolloelement beim Verstellen zwischen seinen Positionen folgt. Durch ein derartiges Führungselement ist es somit möglich, die geometrische Form der Fläche, die das Rolloelement in seiner zumindest einen zweiten Position annimmt, maßgeblich zu beeinflussen.

Zudem ist bei einer erfindungsgemäßen Vorrichtung zum Regulieren einer Luftströmung vorgesehen, dass das zumindest eine Führungselement als ein durch eine Randung des Rolloelementes umfassbarer Innenträger ausgestaltet ist. Durch das Umfassen des als Innenträger ausgestalteten Führungselementes durch eine Randung des Rolloelementes kann ein besonders guter Halt zwischen dem Führungselement und dem Rolloelement sichergestellt werden. Die Randung des Rolloelementes kann dabei insbesondere beispielsweise eine Öse sein. Selbstverständlich kann in das Rolloelement auch eine Randung derartig eingewebt, insbesondere nahtlos eingewebt sein, dass die Randung zum Umfassen eines als Innenträger ausgestalteten Führungselementes ausgestaltet ist. Eine derartige Randung, die zum Umfassen eines Innenträgers ausgestaltet ist, kann dabei selbstverständlich nicht nur an einer Kante des Rolloelementes sondern auch innerhalb einer Fläche des Rolloelementes vorgesehen sein.

Bevorzugt kann bei einer erfindungsgemäßen Vorrichtung zum Regulieren einer Luftströmung vorgesehen sein, dass das Rolloelement ein technisches Gewebe und/oder eine Folie, insbesondere eine Kunststofffolie und/oder einen Faserverbundwerkstoff, aufweist. Ein technisches Gewebe ist dabei ein Gewebe, das insbesondere zu technisch-industriellen Zwecken verwendet wird. Es handelt sich dabei zumeist um ein Material, das entsprechend den zu erwartenden Beanspruchungen ausgelegt ist. Insbesondere sind dabei das technische Gewebe und/oder die Folie, die das Rolloelement aufweist, derart gewählt, dass sie den Beanspruchungen, wie beispielsweise hohe Temperaturunterschiede, Feuchtigkeit und Nässe sowie hohen Luftanpressdrücken, standhalten können. Insbesondere kann dabei vorgesehen sein, für das Rolloelement ein technisches Gewebe zu verwenden, das bereits beispielsweise für die Fertigung von Cabriodachkonstruktionen Anwendung findet. Durch dieses bereits vorhandene Gewebe können Kosten, die durch eine Neuentwicklung entstehen würden, eingespart werden.

Ferner kann bei einer erfindungsgemäßen Vorrichtung zum Regulieren einer Luftströmung vorgesehen sein, dass das Rolloelement zumindest ein Heizungselement aufweist. Dadurch ist es beispielsweise möglich, eine aktive Enteisung des Rolloelementes vorzunehmen. Dadurch kann ein sicherer Betrieb des Rolloelementes, auch im Falle von Außentemperaturen unter dem Gefrierpunkt, sichergestellt werden.

Darüber hinaus kann bei einer erfindungsgemäßen Vorrichtung zum Regulieren einer Luftströmung vorgesehen sein, dass das Rolloelement zumindest ein, insbesondere farbiges, Anzeigeelement aufweist. Ein derartiges Anzeigeelement kann insbesondere dann sichtbar werden, wenn sich das Rolloelement in seiner zumindest einen zweiten Position befindet. Beispielsweise ist es denkbar, für bestimmte verschiedene Motorisierungen eines Fahrzeuges verschiedene farbige Anzeigeelemente des Rolloelementes vorzusehen. Damit ist es beispielsweise möglich, eine Motorisierung des Fahrzeugs bereits zu erkennen, wenn die Motorhaube des Fahrzeuges noch geschlossen ist. Ferner ist es auch beispielsweise möglich, das Rolloelement, insbesondere die sichtbaren Teile des Rolloelementes, in Wagenfarbe auszugestalten. Dadurch kann beispielsweise insbesondere ein einheitlicheres Erscheinungsbild einer Fahrzeugfront erreicht werden. Ferner kann durch die insbesondere farbigen Anzeigeelemente das Design und die Form eines Kühlerschutzgitters des Fahrzeuges aufgenommen und/oder unterstützt werden.

Ferner kann bei einer erfindungsgemäßen Vorrichtung zum Regulieren einer Luftströmung vorgesehen sein, dass das Rolloelement zumindest ein Leuchtelement aufweist. Mit einem derartigen Leuchtelement ist es möglich, ein aktives Beleuchten zumindest eines Teils eines Frontendmoduls und/oder einer Fahrzeugfront zu realisieren. Insbesondere können so auch Teile einer Luftführung des Fahrzeuges, die von externen Lichtquellen wie beispielsweise Handlampen nur schwer erreichbar sind, effektiv beleuchtet werden. Auch ist selbstverständlich eine Beleuchtung eines Kühlerschutzgitters des Fahrzeuges denkbar.

In einer besonders bevorzugten Ausgestaltungsform einer erfindungsgemäßen Vorrichtung zum Regulieren einer Luftströmung kann vorgesehen sein, dass das Rolloelement mehrteilig ausgestaltet ist. Dadurch ist insbesondere eine genauere und situationsangepasstere Steuerung einer Luftströmung möglich, da insbesondere die einzelnen Teile des Rolloelementes separat voneinander ansteuerbar sein können. Ferner können, wenn jedes der einzelnen Teile des Rolloelementes mit einem eigenen, als Wickelelement ausgestalteten, Antrieb ausgestattet ist, diese Wickelelemente kleiner und damit platzsparender ausgestaltet sein. Der Platzbedarf der Vorrichtung zum Regulieren einer Luftströmung, insbesondere der Platzbedarf in Längsrichtung des Fahrzeuges, kann so weiter vermindert werden.

Darüber hinaus kann bei einer erfindungsgemäßen Vorrichtung zum Regulieren einer Luftströmung vorgesehen sein, dass das Rolloelement zum zumindest teilweisen horizontalen oder vertikalen Verschließen der zumindest einen Öffnung ausgestaltet ist. Dadurch ist es möglich, das Rolloelement derart auszugestalten, dass es den Anforderungen für verschiedenste Fahrzeugtypen gerecht wird. Insbesondere kann beispielsweise bei einem zweiteiligen Rolloelement vorgesehen sein, dass die Öffnung vertikal verschlossen werden kann, wobei jedes der Teile des Rolloelementes eine Hälfte der Öffnung verschließt. Ist beispielsweise nur ein einzelnes Rolloelement vorgesehen, kann es von Vorteil sein, dass dieses Rolloelement die Öffnung vertikal verschließt, um zu jeder Zeit eine möglichst gleichmäßige Luftströmung auf die Kühlervorrichtung des Fahrzeuges sicherzustellen.

Gemäß einem zweiten Aspekt der Erfindung wird die Aufgabe durch ein Frontendelement mit den Merkmalen des Anspruchs 11 gelöst.

Ein Frontendelement bildet im Wesentlichen die Front eines Fahrzeuges. In ein derartiges Frontendelement sind dabei oftmals beispielsweise eine Kühlervorrichtung und die dazugehörige Luftführung integriert. Ferner weist ein Frontendelement oftmals weitere funktionale Bauteile wie beispielsweise Elemente eines Aufprallschutzsystemes des Fahrzeuges, beispielsweise einen Stossfänger mit Stossfängerüberzug auf. Dabei sind im Wesentlichen alle Baugruppen eines Frontendelementes an einem Montageträger des Frontendelementes angeordnet und befestigt.

Um eine Luftzuführung zur Kühlervorrichtung variabel regulieren zu können ist eine Vorrichtung zum Regulieren der Luftströmung vorgesehen, die mit einem Rolloelement ausgestattet ist. Das Rolloelement ist dabei verstellbar zwischen einer ersten und zumindest einer zweiten Stellung und dahingehend ausgestaltet, eine Öffnung im Stossfängerüberzug, die Teil der Luftführung zur Kühlervorrichtung darstellt, freizugeben oder zumindest teilweise zu verschließen. Die variablen Stellungen des Rolloelementes erlauben dadurch, auf verschiedene Betriebsparameter beziehungsweise Betriebsphasen beim Betrieb des Fahrzeuges zu reagieren. So kann es beim Beginn des Betriebs des Fahrzeuges von Vorteil sein, durch die Vorrichtung die Öffnung im Stossfängerüberzug zu schließen, um einen Aufwärmvorgang des Motors des Fahrzeuges zu beschleunigen. Im Normalbetrieb kann es von Vorteil sein, die Öffnung durch das Rolloelement wieder freizugeben, um eine effektive Kühlung des Motors durch die Kühlervorrichtung zu ermöglichen. Bei besonders hohen Geschwindigkeiten wiederum kann es von Vorteil sein, die Öffnung wieder zu schließen um den Luftwiderstand des Fahrzeuges zu senken. Selbstverständlich ist es denkbar, das Rolloelement zwischen mehreren zweiten Positionen zu verstellen, um eine möglichst variable und situationsangepasste Stärke der Luftströmung auf die Kühlervorrichtung einstellen zu können. Durch das Vorsehen des Unterstützungselementes kann eine besondere Stabilität des Rolloelementes erreicht werden. Das Rolloelement muss nicht selbst zum Erreichen dieser Stabilität stabil ausgeführt sein sondern kann daher flexibler ausgestaltet sein. Eine flexiblere, insbesondere gebogene Geometrie des Rolloelementes ist somit möglich. Durch das Unterstützungselement wird dem Rolloelement Stabilität verliehen, ein Flattern durch hohen Luftanpressdruck und ein eventuell damit verbundenes Ausreißen, insbesondere an den Seiten des Rolloelementes, kann somit vermieden werden.

Gemäß einer bevorzugten Weiterentwicklung eines erfindungsgemäßen Frontendelementes für ein Fahrzeug kann vorgesehen sein, dass die Vorrichtung zum Regulieren einer Luftströmung gemäß dem ersten Aspekt der Erfindung ausgestaltet ist. Sämtliche Vorteile und Details, die mit Bezug auf eine Vorrichtung zum Regulieren einer Luftströmung gemäß dem ersten Aspekt der Erfindung beschrieben worden sind, gelten somit auch für ein Frontendelement für ein Fahrzeug, das eine derartige Vorrichtung aufweist.

Ferner kann bei einem erfindungsgemäßen Frontendelement für ein Fahrzeug vorgesehen sein, dass das Rolloelement zwischen dem Stossfängerüberzug und dem Kühlerschutzgitter angeordnet ist. Das Kühlerschutzgitter bildet den vorderen Abschluss des Frontendelementes und damit des Fahrzeuges. Durch eine Anordnung des Rolloelementes direkt hinter dem Kühlerschutzgitter und vor dem Stossfängerüberzug ist eine Anordnung des Rolloelementes besonders weit vorne im Fahrzeug möglich. Bei einem geschlossenen Rolloelement ist die gebildete Lufttasche, das heißt das Luftvolumen zwischen Rolloelement und vorderem Ende des Fahrzeuges, besonders klein ausgestaltet. Dadurch lässt sich bei geschlossenem Rolloelement ein besonders niedriger Luftwiderstand des Fahrzeuges erreichen. Dies ist insbesondere bei sehr hohen Geschwindigkeiten des Fahrzeuges von Vorteil, wenn das Rolloelement geschlossen wird, um einen besonders niedrigen Luftwiderstand des Fahrzeuges zu erreichen.

Weitere Vorteile, Merkmale und Einzelheiten der Erfindung ergeben sich aus der nachfolgenden Beschreibung, in der unter Bezugnahme auf Zeichnungen Ausführungsbeispiele der Erfindung im Einzelnen beschrieben sind. Dabei können die in den Ansprüchen und in der Beschreibung erwähnten Merkmale jeweils einzeln für sich als auch in beliebiger Kombination sich auf sämtliche Figuren der Zeichnungen beziehen. Es zeigen jeweils schematisch:
- Figur 1: eine Vorderansicht von Teilen eines erfindungsgemäßen Frontendelementes,
- Figur 2: eine zweite Vorderansicht von Teilen eines erfindungsgemäßen Frontendelementes,
- Figur 3: eine Rückansicht von Teilen eines erfindungsgemäßen Frontendelementes,
- Figur 4: eine Schnittansicht von Teilen eines erfindungsgemäßen Frontendelementes,
- Figur 5: eine vergrößerte Schnittansicht von Teilen eines erfindungsgemäßen Frontendelementes,
- Figur 6: eine Ansicht von Teilen einer erfindungsgemäßen Vorrichtung und
- Figur 7: eine Ansicht von Teilen einer weiteren Ausführungsform einer erfindungsgemäßen Vorrichtung zum Regulieren einer Luftströmung.

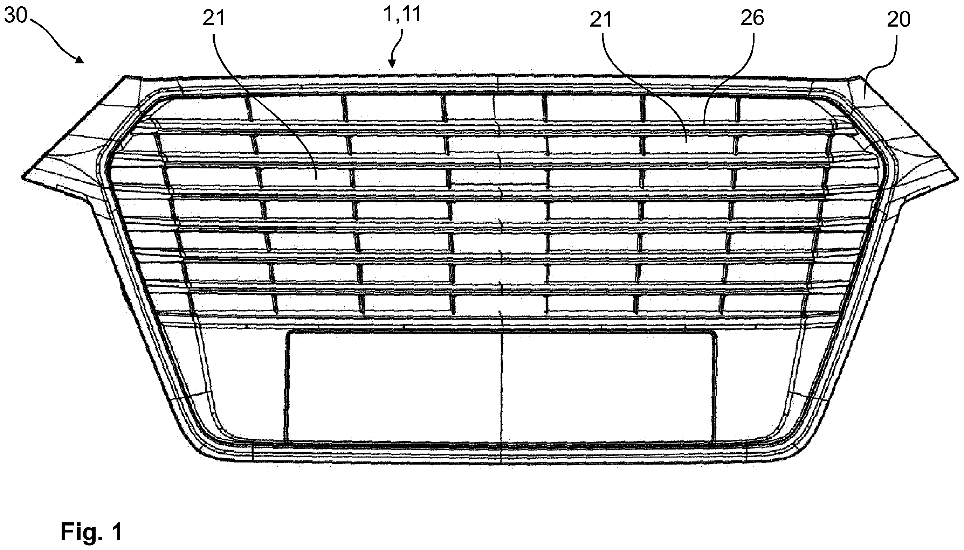

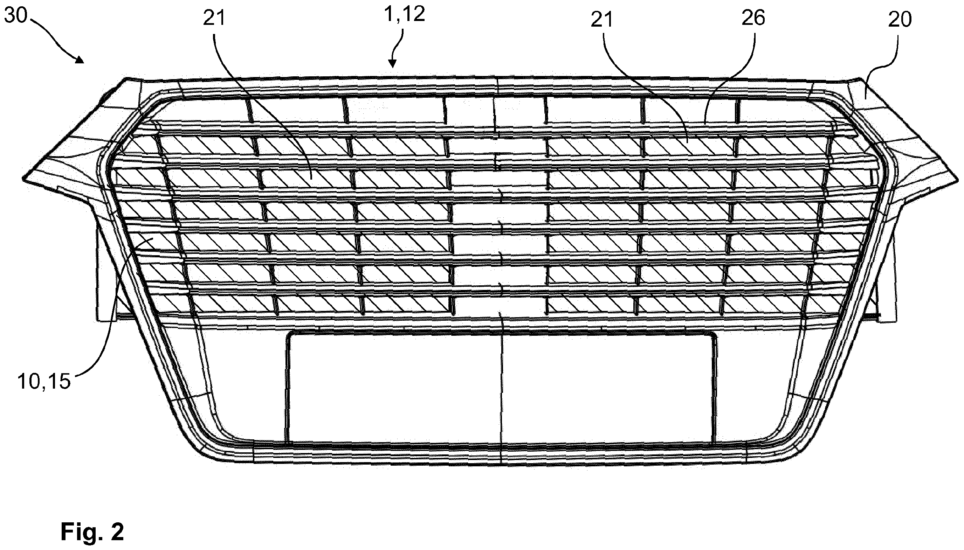

In Fig. 1 und Fig. 2 sind im Wesentlichen Teile einer Ausführungsform eines erfindungsgemäßen Frontendelementes 30 in einer Vorderansicht abgebildet. Sichtbar sind dabei insbesondere ein Teil des Stossfängerüberzuges 20 und das Kühlerschutzgitter 26. In Fig. 1 ist ferner deutlich zu sehen, dass die Öffnung 21 im Stossfängerüberzug 20 für eine Luftströmung durch die Öffnung 21 hindurch geöffnet ist. Das Rolloelement 10 (in Fig. 1 nicht sichtbar) befindet sich in seiner ersten Stellung 11, in der es die Öffnung 21 im Stossfängerüberzug 20 freigibt. Im Gegensatz dazu befindet sich in Fig. 2 das Rolloelement 10 der Vorrichtung 1 zum Regulieren einer Luftströmung in seiner zweiten Stellung 12. Durch das Kühlerschutzgitter 26 ist deutlich das Rolloelement 10, insbesondere das Gewebe 15 des Rolloelementes 10 sichtbar. Durch dieses Rolloelement 10 in einer zweiten Stellung 12 wird die Öffnung 21 im Stossfängerüberzug 20 vollständig verschlossen. Selbstverständlich sind auch weitere zweite Stellungen 12 denkbar, in denen die Öffnung 21 im Stossfängerüberzug 20 lediglich teilweise verschlossen wird. Deutlich erkennbar ist auch, dass die Luftströmung bei einem Rolloelement 10 in seiner ersten Stellung 11 (Fig. 1) auf eine nicht abgebildete Kühlereinrichtung strömen kann, wobei sie bei einem Rolloelement 10 in seiner zweiten Stellung 12 (Fig. 2) durch das Gewebe 15 des Rolloelementes 10 nicht auf das Kühlerelement strömen kann. Dies kann beispielsweise von Vorteil sein, wenn sich der Motor in einer Aufwärmphase befindet oder wenn der Luftwiderstand des Fahrzeuges gesenkt werden soll.

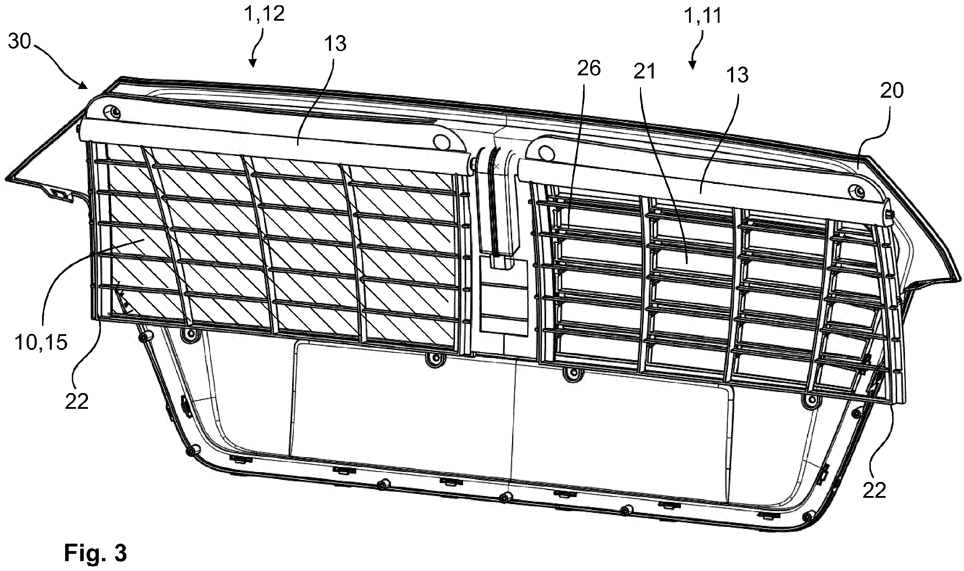

In Fig. 3 ist eine Rückansicht von Teilen eines erfindungsgemäßen Frontendelementes 30 gezeigt. Das Kühlerschutzgitter 26 und der Stossfängerüberzug 20 sind somit jetzt im Gegensatz zu der Ansicht in Fig. 1 und 2, von hinten zu sehen. Das Frontendelement 30 ist ferner mit zwei Vorrichtungen 1 zum Regulieren einer Luftströmung ausgestaltet. Dabei ist die linke Vorrichtung 1 zum Regulieren einer Luftströmung mit einem geschlossenem Rolloelement 10 in seiner zweiten Position 12, die rechte Vorrichtung 1 zum Regulieren einer Luftströmung mit geöffnetem, nicht sichtbarem Rolloelement 10 in seiner ersten Position 11 gezeigt. Dies dient zum Verdeutlichen der räumlichen Anordnung der einzelnen Bauelemente. Beispielsweise ist bei der rechten Vorrichtung 1 zum Regulieren einer Luftströmung sichtbar, dass das gitterartig ausgestaltete Unterstützungselement 22 in seiner Gitterstruktur dem Kühlerschutzgitter 26 angeglichen ist. Dies erlaubt eine besonders gute Luftströmung auf eine Kühlereinrichtung, wenn die Rolloelemente 10 der Vorrichtungen 1 zum Regulieren einer Luftströmung sich in ihren ersten Stellungen 11 befinden. Das Rolloelement 10 der rechten Vorrichtung (nicht sichtbar) befindet sich aufgewickelt am Antriebselement 13. Deutlich sichtbar ist das Rolloelement 10 bei der linken Vorrichtung 1 zum Regulieren einer Luftströmung, die mit geschlossenem Rolloelement 10 abgebildet ist. Das Rolloelement 10 befindet sich dabei in seiner zweiten Stellung 12. Insbesondere ist sichtbar, dass das Gewebe 15 des Rolloelementes 10 der Vorrichtung 1 zum Regulieren einer Luftströmung sich zwischen dem Unterstützungselement 22 und dem Kühlerschutzgitter 26 befindet. Das Kühlerschutzgitter 26 ist dabei durch das Rolloelement 10 verdeckt und nicht mehr sichtbar Das Gewebe 15 des Rolloelementes 10 wird somit durch das Unterstützungselement 22 gestützt. Ein Flattern und im schlimmsten Fall ein Ausreißen des Rolloelementes 10 kann somit sicher verhindert werden. Das Rolloelement 10 wird durch ein Antriebselement 13, das im vorliegenden Fall als Wickelelement ausgestaltet ist, angetrieben. In der gezeigten zweiten Stellung 12 wird die Öffnung 21 vollständig abgedeckt. Selbstverständlich sind auch mehrere zweite Stellungen 12 denkbar, in denen die Öffnung 21 nur teilweise verschlossen wird. Ferner kann zusammen mit einer, wie abgebildet, gebogenen Geometrie der zur Unterstützung verwandten Abschnitte des Unterstützungselementes 22, auch eine gebogene Form des Rolloelementes 10 in seiner zweiten Stellung 12 erreicht werden. Insbesondere sind dabei die zur Unterstützung des Rolloelementes 10 verwandten Abschnitte des Unterstützungselementes 22 abgerundet ausgestaltet, um ein Zerstören des Rolloelementes 10 zu verhindern.

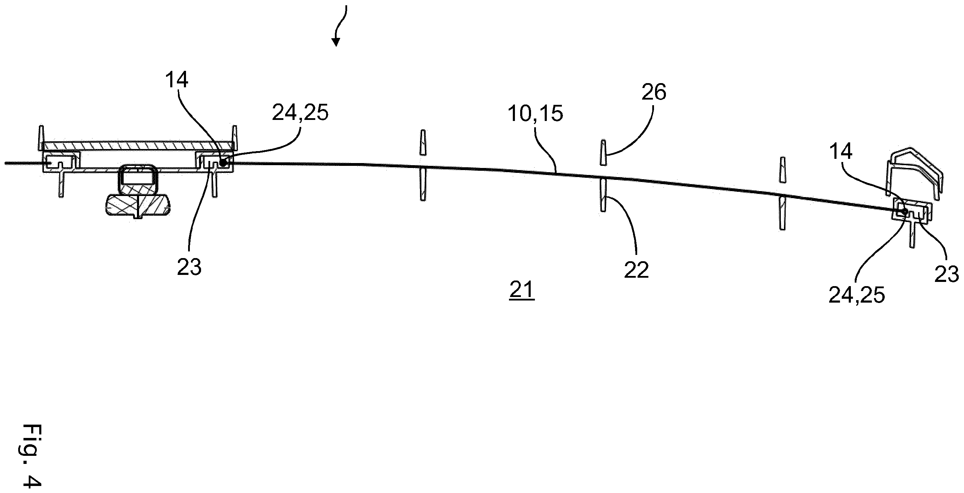

In Fig. 4 ist eine Schnittansicht von Teilen einer erfindungsgemäßen Vorrichtung 1 zum Regulieren einer Luftströmung gezeigt, die hinter einem Kühlerschutzgitter 26 angeordnet ist. Die Schnittebene ist senkrecht zur Verschlussrichtung des Rolloelementes 10 und senkrecht zur Luftströmung durch die Öffnung 21. Das Gewebe 15 des Rolloelementes 10 befindet sich dabei insbesondere zwischen dem Unterstützungselement 22 und dem Kühlerschutzgitter 26. An zwei entgegengesetzten Enden des Unterstützungselementes 22, die insbesondere auch ein linkes und ein rechtes Ende der Öffnung 21 darstellen, sind jeweils eine Aufnahme 23 zum Aufnehmen des Rolloelementes 10 angeordnet. Im Bereich dieser Aufnahmen ist das Rolloelement 10 als Randung 14 ausgestaltet, wobei die Randung 14 insbesondere zum Umfassen eines als Innenträger 25 ausgestalteten Führungselementes 24 des Unterstützungselementes 22 ausgestaltet ist. Bei einem Verstellen des Rolloelementes 10 aus seiner ersten Stellung 11 in seine zweite Stellung 12 wird jeweils die Randung 14 auf den feststehenden Innenträger 25 aufgeschoben. Dies erlaubt ein besonders sicheres Verstellen des Rolloelementes 10 aus seiner ersten Stellung 11 in seine zweite Stellung 12. Ferner wird durch die Aufnahmen 23 ein oberes und ein unteres Ende der Öffnung 21 definiert. Dadurch, dass das Rolloelement 10 in diesen Aufnahmen 23 aufgenommen ist, wird die komplette Öffnung 21 durch das Rolloelement 10 verschließbar. Dadurch wird eine besonders definierte Steuerung der Luftströmung zur Kühlereinrichtung des Fahrzeugs möglich.

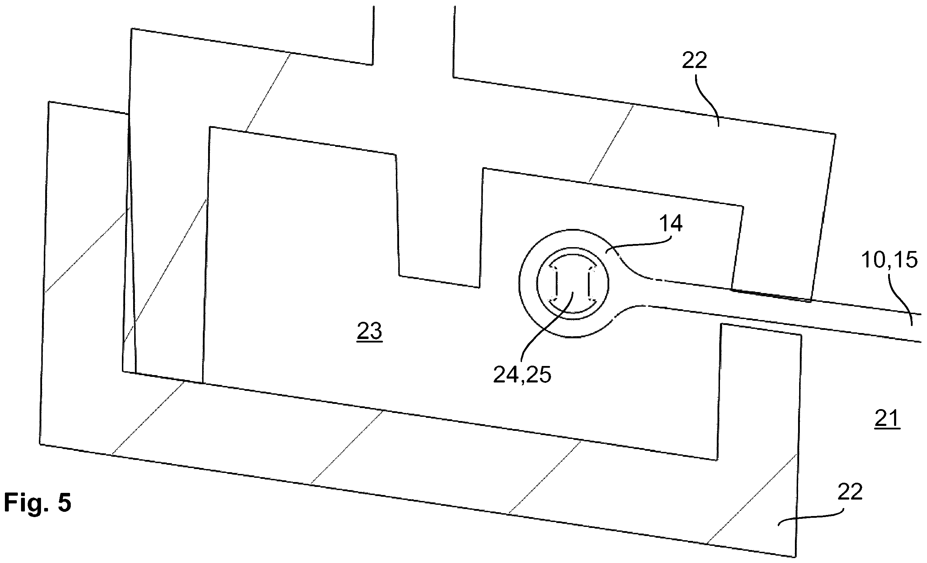

Fig. 5 zeigt eine vergrößerte Teilansicht der Abbildung aus Fig. 4. Deutlich sichtbar ist, dass die Randung 14 am Ende des Gewebes 15 des Rolloelementes 10 ein als Innenträger 25 ausgestaltetes Führungselement 24 umfasst. Die Randung kann dabei, insbesondere nahtlos, gewebt sein. Dabei befindet sich sowohl die Randung 14 als auch der Innenträger 25 innerhalb der Aufnahme 23 des Unterstützungselementes 22. Die Größen der einzelnen Bauteile sind derart dimensioniert, dass ein Herausrutschen des Innenträgers 25 und damit auch der den Innenträger 25 umfassende Randung 14 des Gewebes 15 des Rolloelementes 10 aus der Aufnahme 23 heraus nicht möglich ist. Dadurch ist ein besonders sicherer Halt des Rolloelementes 10 in der Aufnahme 23 erreichbar. Auch bei hohen Luftanpressdrücken kann so ein sicheres und stabiles Verschließen der Öffnung 21 durch das Gewebe 15 des Rolloelementes 10 erreicht werden.

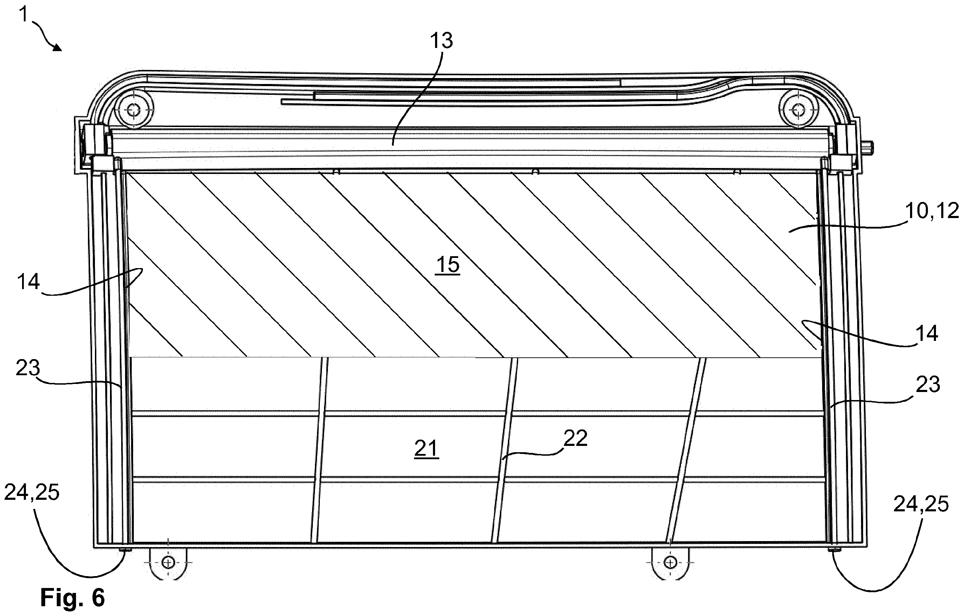

Fig.6 zeigt eine Ausgestaltungsform einer erfindungsgemäßen Vorrichtung 1 zum Regulieren einer Luftströmung. Das Rolloelement 10 der erfindungsgemäßen Vorrichtung 1 befindet sich dabei in einer zweiten Stellung 12, die die Öffnung 21 nur teilweise verschließt. Das Gewebe 15 wird dafür beim Versetzen des Rolloelementes 10 in seine zweite Stellung 12 von einem Antriebselement 13, das als Wickelelement ausgestaltet ist, abgerollt. Die Randungen 14 werden beim Versetzen in Aufnahmen 23 des Unterstützungselementes 22 geführt. Gleichzeitig werden als Innenträger 25 ausgestaltete Führungselemente 24 des Unterstützungselementes 22 von den Randungen 14 des Rolloelementes 10 umfasst. Dadurch kann zu jeder Zeit ein sicherer Halt des Rolloelementes 10 über die gesamte verdeckte Öffnung 21 sichergestellt werden. Ein Ausreißen beziehungsweise Flattern der Randungen 14 des Rolloelementes 10 kann so sicher vermieden werden. Um eine Verletzung oder Zerstörung des Gewebes 15 des Rolloelementes 10 durch das Unterstützungselement 22 zu verhindert, sind die zur Unterstützung verwendeten Abschnitte des Unterstützungselementes 22 glatt, insbesondere abgerundet, ausgeführt. Durch die sichtbare gitterartige Ausgestaltung des Unterstützungselementes 22 ist ferner zum Einen ein besonders stabiler Aufbau ermöglicht und zum Anderen aber auch eine möglichst große Luftdurchlässigkeit für die Luftströmung auf die Kühlervorrichtung des Fahrzeuges ermöglicht.

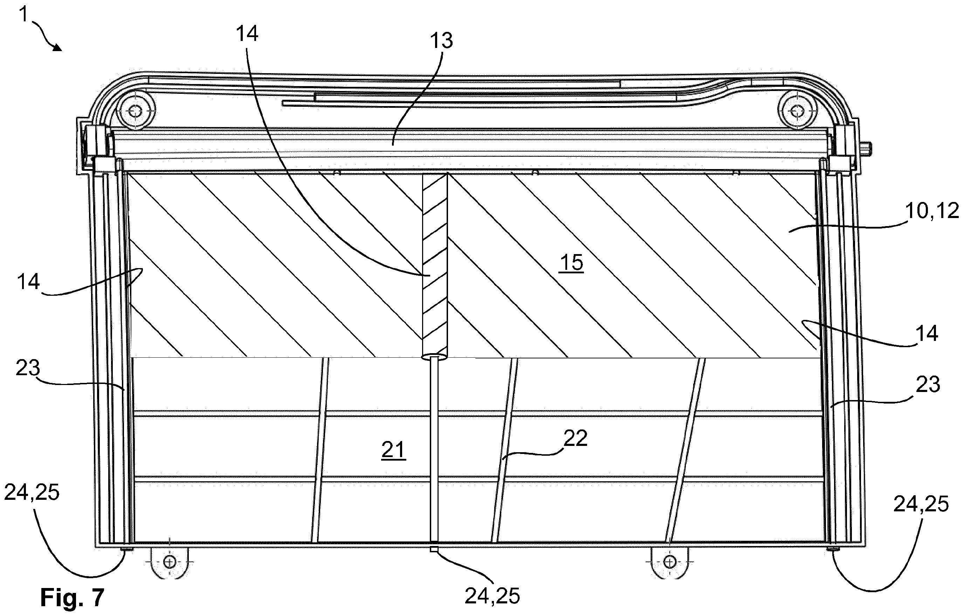

In Fig. 7 ist eine weitere Ausgestaltungsform einer erfindungsgemäßen Vorrichtung 1 zum Regulieren einer Luftströmung gezeigt. Im Gegensatz zu der Ausgestaltungsform, die in Fig. 6 gezeigt ist, weist diese Ausgestaltungsform des Rolloelementes 10 eine weitere Randung 14 in der Mitte der Fläche des Gewebes 15 auf. Diese Randung 14 ist ebenfalls dazu ausgestaltet, ein als Innenträger 25 ausgestaltetes Führungselement 24 zu umfassen. Auf diese Art kann nochmals ein zusätzlicher Halt in der Mitte beziehungsweise im Inneren des Gewebes 15 des Rolloelementes 10 erreicht werden. Dies ist insbesondere dann von Vorteil, wenn besonders große Anpressdrücke, insbesondere beispielsweise durch sehr hohe Geschwindigkeiten, kompensiert werden müssen.

### Bezugszeichenliste

- 1: Vorrichtung zum Regulieren einer Luftströmung

- 10: Rolloelement
- 11: Erste Stellung
- 12: Zweite Stellung
- 13: Antriebselement
- 14: Randung
- 15: Gewebe/Folie

- 20: Stossfängerüberzug
- 21: Öffnung
- 22: Unterstützungselement
- 23: Aufnahme
- 24: Führungselement
- 25: Innenträger
- 26: Kühlerschutzgitter

- 30: Frontendelement

## Patentansprüche

1. Vorrichtung (1) zum Regulieren einer Luftströmung zu einer Kühlervorrichtung eines Fahrzeuges, wobei die Luftströmung durch zumindest eine Öffnung (21) eines Stossfängerüberzuges (20), an dem ein Kühlerschutzgitter (26) angeordnet ist, auf die Kühlervorrichtung geleitet ist und ein Rolloelement (10) vorgesehen ist, das zwischen einer ersten (11) und zumindest einer zweiten Stellung (12) verstellbar ist, wobei das Rolloelement (10) die Öffnung (21) in der ersten Stellung (11) freigibt und in der zumindest einen zweiten Stellung (12) zumindest teilweise verschließt, wobei an und/oder in der Öffnung (21) ein Unterstützungselement (22) vorgesehen ist, das das Rolloelement (10) in der zumindest einen zweiten Stellung (12) unterstützt, wobei das Unterstützungselement (22) zumindest ein Führungselement (24) zum Führen des Rolloelements (10) beim Verstellen des Rolloelements (10) aufweist,
**dadurch gekennzeichnet,**
**dass** das Unterstützungselement (22) gitterartig ausgestaltet und in seiner Gitterstruktur dem Kühlerschutzgitter (26) angeglichen ist und dass das zumindest eine Führungselement (24) als ein durch eine Randung (14) des Rolloelements (10) umfassbarer Innenträger (25) ausgestaltet ist.

2. Vorrichtung (1) zum Regulieren einer Luftströmung nach Anspruch 1 oder 2,
**dadurch gekennzeichnet,**
**dass** die zur Unterstützung des Rolloelements (10) verwendeten Abschnitte des Unterstützungselements (22) glatt, insbesondere abgerundet, ausgestaltet sind.

3. Vorrichtung (1) zum Regulieren einer Luftströmung nach einem der vorhergehenden Ansprüche,
**dadurch gekennzeichnet,**
**dass** das Unterstützungselement (22) als ein, insbesondere tragendes, Teil des Stossfängerüberzuges (20) ausgebildet ist.

4. Vorrichtung (1) zum Regulieren einer Luftströmung nach einem der vorhergehenden Ansprüche,
**dadurch gekennzeichnet,**
**dass** die Vorrichtung (1) ein Antriebselement (13), insbesondere ein Wickelelement, zum Verstellen des Rolloelements (10) aufweist.

5. Vorrichtung (1) zum Regulieren einer Luftströmung nach einem der vorhergehenden Ansprüche,
**dadurch gekennzeichnet,**
**dass** das Unterstützungselement (22) zumindest eine Aufnahme (23) zum Aufnehmen einer Randung (14) des Rolloelements (10) aufweist.

6. Vorrichtung (1) zum Regulieren einer Luftströmung nach einem der vorhergehenden Ansprüche,
**dadurch gekennzeichnet,**
**dass** das Rolloelement (10) ein technisches Gewebe (15) und/oder eine Folie (15), insbesondere eine Kunststofffolie und/oder einen Faserverbundwerkstoff, aufweist.

7. Vorrichtung (1) zum Regulieren einer Luftströmung nach einem der vorhergehenden Ansprüche,
**dadurch gekennzeichnet,**
**dass** das Rolloelement (10) zumindest ein Heizungselement aufweist.

8. Vorrichtung (1) zum Regulieren einer Luftströmung nach einem der vorhergehenden Ansprüche,
**dadurch gekennzeichnet,**
**dass** das Rolloelement (10) zumindest ein, insbesondere farbiges, Anzeigeelement aufweist.

9. Vorrichtung (1) zum Regulieren einer Luftströmung nach einem der vorhergehenden Ansprüche,
**dadurch gekennzeichnet,**
**dass** das Rolloelement (10) zumindest ein Leuchtelement aufweist.

10. Vorrichtung (1) zum Regulieren einer Luftströmung nach einem der vorhergehenden Ansprüche,
**dadurch gekennzeichnet,**
**dass** das Rolloelement (10) mehrteilig ausgestaltet ist und/oder dass das Rolloelement (10) zum zumindest teilweisen horizontalen oder vertikalen Verschließen der zumindest einen Öffnung (21) ausgestaltet ist.

11. Frontendelement (30) für ein Fahrzeug, zumindest aufweisend einen Montageträger, eine Kühlervorrichtung, einen Stossfängerüberzug (20), wobei die Kühlervorrichtung und der Stossfängerüberzug (20) am Montageträger befestigt sind, ein am Stossfängerüberzug (20) angeordnetes Kühlerschutzgitter (26), wobei im Stossfängerüberzug (20) zumindest eine Öffnung (21) zum Leiten einer Luftströmung auf die Kühlervorrichtung vorgesehen ist, und eine Vorrichtung (1) zum Regulieren der Luftströmung mit einem Rolloelement (10), wobei das Rolloelement (10) zwischen einer ersten (11) und zumindest einer zweiten Stellung (12) verstellbar ist und wobei das Rolloelement (10) die zumindest eine Öffnung (21) in der ersten Stellung (11) freigibt und in der zumindest einen zweiten Stellung (12) zumindest teilweise verschließt, wobei an und/oder in der Öffnung (21) ein Unterstützungselement (22) vorgesehen ist, das das Rolloelement (10) in der zumindest einen zweiten Stellung (12) unterstützt,
**dadurch gekennzeichnet,**
**dass** das Unterstützungselement (22) gitterartig ausgestaltet und in seiner Gitterstruktur dem Kühlerschutzgitter (26) angeglichen ist.

12. Frontendelement (30) für ein Fahrzeug gemäß Anspruch 11,
**dadurch gekennzeichnet,**
**dass** die Vorrichtung (1) zum Regulieren einer Luftströmung gemäß wenigstens einem der Ansprüche 1 bis 8 ausgestaltet ist.

13. Frontendelement (30) für ein Fahrzeug gemäß Anspruch 11 oder 12, **dadurch gekennzeichnet,**
**dass** das Rolloelement (10) zwischen dem Stossfängerüberzug (20) und dem Kühlerschutzgitter (26) angeordnet ist.

## Claims

1. Device (1) for regulating an air flow to a cooler device of a vehicle, wherein the air flow is directed to the cooler device through at least one opening (21) of a bumper cover (20), wherein a cooler protection grille (26) is arranged on said bumper cover (20), and a roller element (10) is provided, said roller element (10) being adjustable between a first (11) and at least one second position (12), wherein the roller element (10) uncovers the opening (21) in the first position (11) and covers the opening (21) in the at least one second position (12) at least partially,
**wherein**
at and/or in the opening (21) a support element (22) is provided supporting the roller element (10) in the at least one second position (12), with the support element (22) having at least one guide element (24) for guiding the roller element (10) during displacing the roller element (10),
**characterized in,**
**that** the support element (22) has a lattice-like design and is aligned in its lattice structure with the cooler protection grille (26) and in that at least one guide element (24) is designed as an inner carrier (25), which can be gripped by an edge (14) of the roller element (10).

2. Device (1) for regulating an air flow according to claim 1 or 2,
**characterized in,**
**that** the sections of the support element (22) used to support the roller element (10) are smooth, in particular rounded.

3. Device (1) to regulate an air flow according to one of the previous claims, **characterized in**
**that** the support element (22) is designed as a, in particular load-bearing, part of the bumper cover (20).

4. Device (1) to regulate an air flow according to one of the previous claims, **characterized in**
**that** the device (1) has a drive element (13), in particular a winding element, for adjusting the roller element (10).

5. Device (1) to regulate an air flow according to one of the previous claims, **characterized in**
**that** the support element (22) has at least one receptacle (23) for receiving an edge (14) of the roller element (10).

6. Device (1) to regulate an air flow according to one of the previous claims, **characterized in**
**that** the roller element (10) comprises a technical fabric (15) and/or foil (15), in particular a plastic foil and/or a fiber composite material.

7. Device (1) to regulate an air flow according to one of the previous claims, **characterized in**
**that** the roller element (10) has at least one heater element.

8. Device (1) to regulate an air flow according to one of the previous claims, **characterized in**
**that** the roller element (10) has at least one, in particular color, display element.

9. Device (1) to regulate an air flow according to one of the previous claims, **characterized in**
**that** the roller element (10) has at least one light element.

10. Device (1) to regulate an air flow according to one of the previous claims, **characterized in**
**that** the roller element (10) has a multi-part design and/or that the roller element (10) is designed to at least partially close, horizontally or vertically, the at least one opening (21).

11. Front end element (30) for a vehicle, comprising at least an assembly support, a cooler device, a bumper cover (20), with the cooler device and bumper cover (20) attached to the assembly support, a cooler grille (26) located on the bumper cover (20), with at least one opening (21) for guiding an air flow to the cooler device, and a device (1) for regulating the air flow with a roller element (10), wherein the roller element (10) is movable between a first position (11) and at least a second position (12) and wherein the roller element (10) covers an opening (21) in a first position (11) at least partially, wherein at and/or in the opening (21) a supporting element (22) is provided, which supports the roller element (10) in the at least second position (12),
**characterized in,**
**that** the support element (22) has a lattice-like design and is aligned with the cooler grille (26) in its lattice structure.

12. Front end element (30) for a vehicle according to claim 11,
**characterized in,**
**that** the device (1) is designed to regulate an air flow according to at least one of claims 1 to 8.

13. Front end element (30) for a vehicle according to claim 11 or 12,
**characterized in,**
**that** the roller element (10) is located between the bumper cover (20) and the cooler grille (26).

## Revendications

1. Dispositif (1) de régulation d'un flux d'air vers un dispositif refroidisseur d'un véhicule, dans lequel le flux d'air est dirigé par au moins une ouverture (21) d'un couvercle de pare-chocs (20), sur lequel est disposée une grille de protection du refroidisseur (26), sur le dispositif de refroidisseur, et un élément de rouleau (10) est prévu, qui est réglable entre une première (11) et au moins une deuxième position (12), dans lequel l'élément de rouleau (10) libère l'ouverture (21) dans la première position (11) et la ferme au moins partiellement dans au moins une deuxième position (12),
**dans lequel**
un élément de support (22) est prévu sur et/ou dans l'ouverture (21) qui supporte l'élément de rouleau (10) dans l'au moins une deuxième position (12), dans lequel l'élément de support (22) comprend au moins un élément de guidage (24) pour guider l'élément de rouleau (10) lors du réglage de l'élément de rouleau (10),
**caractérisé en ce**
**que** l'élément de support (22) présente une configuration en forme de grille et est adapté dans sa structure de grille à la grille de protection de refroidisseur (26), et **en ce que** l'au moins un élément de guidage (24) est configuré comme un support intérieur (25) qui peut être entouré par un bord (14) de l'élément de rouleau (10).

2. Dispositif (1) de régulation d'un flux d'air selon la revendication 1 ou 2,
**caractérisé en ce que**
les sections de l'élément de support (22) servant à supporter l'élément de rouleau (10) sont fisses, en particulier arrondies.

3. Dispositif (1) de régulation d'un flux d'air selon l'une quelconque des revendications précédents,
**caractérisé en ce que,**
l'élément de support (22) est conçu comme une partie, en particulier une partie de support, du couvercle de pare-chocs (20).

4. Dispositif (1) de régulation d'un flux d'air selon l'une quelconque des revendications précédents,
**caractérisé en ce que,**
le dispositif (1) présente un élément d'entraînement (13), en particulier un élément d'enroulement, pour le réglage de l'élément de rouleau (10).

5. Dispositif (1) de régulation d'un flux d'air selon l'une quelconque des revendications précédents,
**caractérisé en ce que,**
l'élément de support (22) présente au moins un logement (23) pour recevoir un bord (14) de l'élément de rouleau (10).

6. Dispositif (1) de régulation d'un flux d'air selon l'une quelconque des revendications précédents,
**caractérisé en ce que,**
l'élément de rouleau (10) comprend un tissu technique (15) et/ou un film (15), en particulier un film plastique (15), et/ou un matériau composite fibreux.

7. Dispositif (1) de régulation d'un flux d'air selon l'une quelconque des revendications précédents,
**caractérisé en ce que,**
l'élément de rouleau (10) présente au moins un élément chauffant.

8. Dispositif (1) de régulation d'un flux d'air selon l'une quelconque des revendications précédents,
**caractérisé en ce que,**
l'élément de rouleau (10) présente au moins un élément d'affichage, notamment en couleur.

9. Dispositif (1) de régulation d'un flux d'air selon l'une quelconque des revendications précédents,
**caractérisé en ce que,**
l'élément de rouleau (10) présente au moins un élément d'éclairage.

10. Dispositif (1) de régulation d'un flux d'air selon l'une quelconque des revendications précédents,
**caractérisé en ce que,**
l'élément de rouleau (10) est réalisé en plusieurs parties et/ou **en ce que** l'élément de rouleau (10) est réalisé pour fermer au moins partiellement l'au moins une ouverture (21) horizontalement ou verticalement.

11. Élément d'extrémité avant (30) pour un véhicule, comprenant au moins un support de montage, un dispositif refroidisseur, un couvercle de pare-chocs (20), le dispositif refroidisseur et le couvercle de pare-chocs (20) étant fixés au support de montage, une grille de protection de refroidisseur (26) disposée sur le couvercle de pare-chocs (20), au moins une ouverture (21) étant prévue dans le couvercle de pare-choc (20) pour diriger un flux d'air sur le dispositif refroidisseur, et un dispositif (1) pour régler le flux d'air par un élément de rouleau (10), l'élément de rouleau (10) étant réglable entre une première (11) et au moins une deuxième position (12), et l'élément de rouleau (10) libérant la au moins une ouverture (21) dans la première position (11) et la fermant au moins partiellement dans l'au moins une deuxième position (12), un élément de support (22) étant prévu sur et/ou dans l'ouverture (21), lequel élément de support soutient l'élément de rouleau (10) dans la au moins une deuxième position (12),
**caractérisé en ce**
**que** l'élément de support (22) a une configuration en forme de grille et sa structure de grille est alignée avec la grille de protection de refroidisseur (26).

12. Élément d'extrémité avant (30) pour un véhicule selon la revendication 11,
**caractérisé en ce**
**que** le dispositif (1) est conçu pour réguler un flux d'air selon au moins une des revendications 1 à 8.

13. Élément d'extrémité avant (30) pour un véhicule selon la revendication 11 ou 12,
**caractérisé en ce**
**que** l'élément de rouleau (10) est disposé entre le couvercle de pare-chocs (20) et la grille de protection de refroidisseur (26).
